(19) **Europäisches Patentamt**
**European Patent Office**
**Office européen des brevets**

(11) **EP 2 924 650 A1**

(12) **EUROPEAN PATENT APPLICATION**

(43) Date of publication:
**30.09.2015 Bulletin 2015/40**

(51) Int Cl.:
***G06T 5/00*** (2006.01)

(21) Application number: **14461519.2**

(22) Date of filing: **28.03.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Patents Factory Ltd. Sp. z o.o.**
**65-043 Zielona Gora (PL)**

(72) Inventors:
• **Paczkowski, Jacek**
**65-043 Zielona Gora (PL)**

• **Kramek, Krzysztof**
**65-043 Zielona Gora (PL)**
• **Nalewa, Tomasz**
**65-043 Zielona Gora (PL)**

(74) Representative: **Pawlowski, Adam**
**Eupatent.PL**
**ul. Zeligowskiego 3/5**
**90-752 Lodz (PL)**

Remarks:
Amended claims in accordance with Rule 137(2) EPC.

(54) **A method and system for sharpening or blurring an image**

(57)     A method for sharpening or blurring an image represented by an input bitmap (P), the method comprising the steps of: creating a first bitmap (DX) by differentiating along the X-axis the values of pixels of the input bitmap (P); creating a second bitmap (DY) by differentiating along the Y-axis the values of pixels of the input bitmap (P); creating a third bitmap (DXY) by adding bitmaps (DX) and (DY); and creating an output bitmap (M) by subtracting, from the input bitmap (P), the third bitmap (DXY) having values of pixels multiplied by a predetermined positive or negative coefficient (k).

101 Create new bitmap DX by differentiating original bitmap P along the X-axis

102 Add a column of pixels at the end

103 Create new bitmap DY by Differentiating original bitmap P along the Y-axis

104 Add a row of pixels at the end

105 Sum bitmaps DX, DY to obtain bitmap DXY

106 Multiply values of pixels of DXY by coefficient (k)

107 Subtract DXY from P

**Fig. 1**

EP 2 924 650 A1

**Description**

The present invention relates to a method and system for sharpening or blurring an image.

There are known various methods for processing images, in particular sharpening or blurring.

A US patent US5696850 discloses a system for automatic image sharpening in an electronic imaging system. The components of the device have modulation transfer functions. After capturing an image with an imaging device, a system modulation transfer function is generated from the imaging device modulation transfer function and the reproduction device modulation transfer function, and is used to generate a sharpening function, followed by application of the sharpening filter to the captured image.

A US patent application US2011/0096366 presents an image processing apparatus which performs processing of applying blur processing to divided image data, and subsequently, compositing such images. The apparatus estimates a pixel out of an image boundary of first image data and neighboring image data, and then generates blurring image data using a filter for the first image data, with reference to the first image data, the second image data and an estimation pixel estimated by the out of image boundary estimation unit.

It would be advantageous to provide a method for sharpening or blurring an image that is simple and effective, and easy to implement in software and/or hardware.

The object of the invention is a method for sharpening or blurring an image represented by an input bitmap (P), the method comprising the steps of: creating a first bitmap (DX) by differentiating along the X-axis the values of pixels of the input bitmap (P); creating a second bitmap (DY) by differentiating along the Y-axis the values of pixels of the input bitmap (P); creating a third bitmap (DXY) by adding bitmaps (DX) and (DY); and creating an output bitmap (M) by subtracting, from the input bitmap (P), the third bitmap (DXY) having values of pixels multiplied by a predetermined positive or negative coefficient (k).

Preferably, the values of pixels of the bitmaps (P, DX, DY, DXY, M) are calculated separately for each color component.

Preferably, the output bitmap (M) has pixels represented by the same numbering type as the input bitmap (P).

Preferably, after subtraction of the third bitmap (DXY) from the input bitmap (P), the pixel value exceeds the allowed range of values of the numbering type, the pixel value is changed to the closest allowed value within the range.

Preferably, the method further comprises the step of supplementing the first bitmap (DX) by a column at the end and supplementing the second bitmap (DY) by a row at the end.

The object of the invention is also a computer program comprising program code means for performing all the steps of the computer-implemented method as described above when said program is run on a computer, as well as a computer readable medium storing computer-executable instructions performing all the steps of the computer-implemented method as described above when executed on a computer.

Another object of the present invention is a computer-implemented system for sharpening or blurring an image represented by an input bitmap (P), the system comprising a controller configured to: create a first bitmap (DX) by differentiating along the X-axis the values of pixels of the input bitmap (P); create a second bitmap (DY) by differentiating along the Y-axis the values of pixels of the input bitmap (P); create a third bitmap (DXY) by adding bitmaps (DX) and (DY); and create an output bitmap (M) by subtracting, from the input bitmap (P), the third bitmap (DXY) having values of pixels multiplied by a predetermined positive or negative coefficient (k).

These and other objects presented herein are accomplished by providing a method and a system for sharpening or blurring an image. Further details and features of the present invention, its nature and various advantages will become more apparent from the following detailed description of the preferred embodiments shown in a drawing, in which:

Fig. 1 presents an example embodiment of a method for sharpening or blurring an image.
Fig. 2 present a system for sharpening or blurring an image.
Fig. 3 presents examples of P, DX, DY, DXY, and output bitmaps M.

NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

DESCRIPTION OF EMBODIMENTS

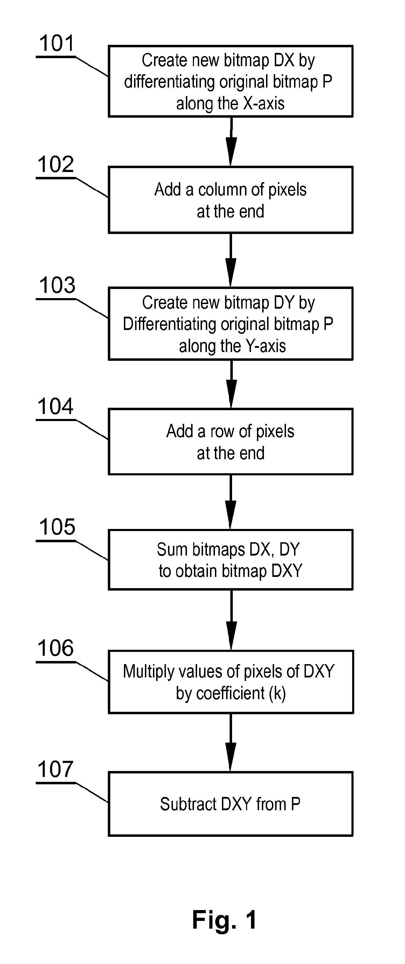

Fig. 1 shows an example embodiment of a method for sharpening or blurring an image. The process starts at step 101, where a new bitmap DX is created based on the input bitmap P. It is done by differentiating along the X-axis each of the R, G, B values of pixels of bitmap P, so that a pixel value of (x,y) coordinates is as follows:

$$DXR_{(x,y)} = \frac{PR_{(x+1,y)} - PR_{(x,y)}}{2}$$

$$DXG_{(x,y)} = \frac{PG_{(x+1,y)} - PG_{(x,y)}}{2}$$

$$DXB_{(x,y)} = \frac{PB_{(x+1,y)} - PB_{(x,y)}}{2}$$

wherein R, G and B values indicate given color component of input pixel and differentiated bitmap pixel.
Next, in step 102, the newly created bitmap DX is supplemented by an additional column with zeroes at the end, so that it retains the same size as the input bitmap P.
Subsequently, in step 103, a new bitmap DY is created based on the input bitmap P. It is done by differentiating along the Y-axis each of the R, G, B values of pixels of bitmap P, so that a pixel value of (x,y) coordinates is as follows:

$$DYR_{(x,y)} = \frac{PR_{(x,y+1)} - PR_{(x,y)}}{2}$$

$$DYG_{(x,y)} = \frac{PG_{(x,y+1)} - PG_{(x,y)}}{2}$$

$$DYB_{(x,y)} = \frac{PB_{(x,y+1)} - PB_{(x,y)}}{2}$$

Next, in step 104, the newly created bitmap DY is supplemented by an additional row with zeroes at the end, so that it retains the same size as input bitmap P.
In step 105 there is created a new bitmap DXY. It is done by summing bitmaps DX and DY as follows:

$$DXYR_{(x,y)} = DXR_{(x,y)} + DYR_{(x,y)}$$

$$DXYG_{(x,y)} = DXG_{(x,y)} + DYG_{(x,y)}$$

$$DXYB_{(x,y)} = DXB_{(x,y)} + DYB_{(x,y)}$$

Subsequently, in step 106, the values of pixels obtained in step 105 are multiplied by a coefficient (k). The coefficient (k) determines the degree of sharpening or blurring of the input image P. For positive values of (k), the image is being sharpened, and for negative values of (k) the image is being blurred.

In step 107, the multiplied bitmap DXY from step 106 is subtracted from the input image P as follows:

$$MR_{(x,y)} = PR_{(x,y)} - k * DXYR_{(x,y)}$$

$$MG_{(x,y)} = PG_{(x,y)} - k * DXYG_{(x,y)}$$

$$MB_{(x,y)} = PB_{(x,y)} - k * DXYB_{(x,y)}$$

thereby resulting in obtaining a new, modified output bitmap M, which is either sharpened or blurred version of the input bitmap P.

A typical input bitmap has component color values which are positive numbers, typically 8-bit. Bitmaps DX, DY and DXY have component color values which are numbers with a sign, and representation of them requires more bits than the input bitmap P. The resulting bitmap M should be, after completing the calculations, converted to the same form as input bitmap P. Therefore, if the bitmap P has color components of uint8 type (8-bit number without sign), then the output bitmap M should also have components of this type. The values of the output bitmap M before changing the type can have values from outside of the target type. Consequently, there will occur a saturation of the values. For example, after sharpening, the component R of one of the pixels of M may have a value of +510. After changing the type to uint8, it will have a value +255. The component G of another pixel can have value of -117. After conversion into uint8 type, this component will have a value 0.

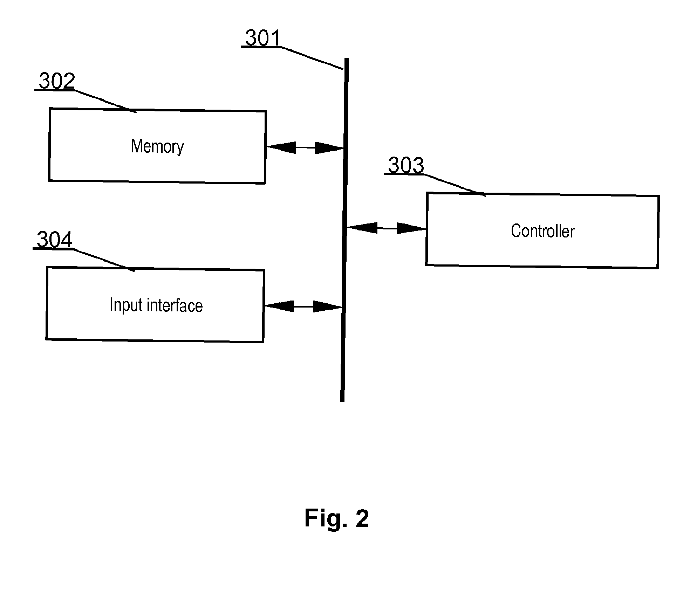

Fig. 2 shows a system for sharpening or blurring an image. The system may be implemented by using programmable logic circuits such as PGA (Programmable Gate Array), FPGA (Field-Programmable Gate Array) or ASIC (Application-Specific Integrated Circuit) or SoC (System on the Chip). The system comprises a suitable data bus 301 for communicating, preferably bidirectionally, all circuits of the system. Further, the system comprises a memory 302 for storing required software for the controller 303 and any temporary data needed for operation of the system, such as image data bitmaps. The controller 303 is configured to execute software that allows for sharpening or blurring of the image, wherein such software is configured to execute method steps of Fig. 1. The controller 303 may also receive user input determining (k) coefficient value via optional input interface 304.

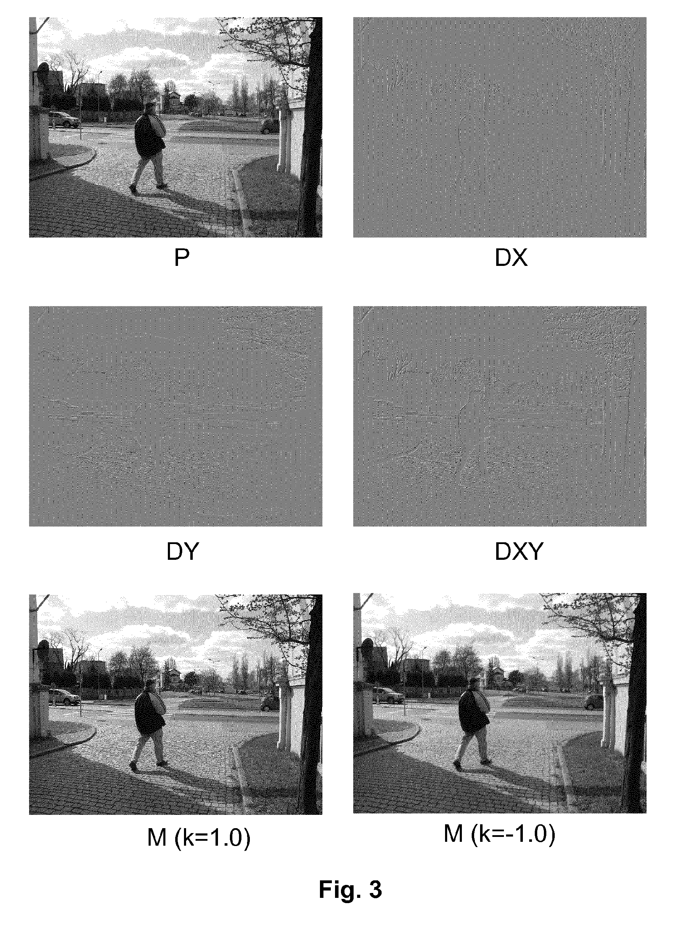

Fig. 3 presents an exemplary grayscale bitmap P and corresponding bitmaps DX, DY and DXY (the components of which have been scaled to make it reproducible on a 0-255 range). Fig. 3 also presents modified images M created by using coefficients k=1.0 (sharpened image) and k=-1.0 (blurred image).

The method can be used in software for video and image editing, video and image previewing and similar. This algorithm can be also implemented in video recorders and cameras. In such case, the implementation can be through hardware (FPGA or ASIC).

It can be easily recognized, by one skilled in the art, that the aforementioned method for sharpening or blurring an image may be performed and/or controlled by one or more computer programs. Such computer programs are typically executed by utilizing the computing resources in a computing device such as personal computers, personal digital assistants, cellular telephones, dedicated controllers or the like. Applications are stored on a non-transitory medium. An example of a non-transitory medium is a non-volatile memory, for example a flash memory or volatile memory, for example RAM. The computer instructions are executed by a suitable processor.

These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

**Claims**

1. A method for sharpening or blurring an image represented by an input bitmap (P), the method comprising the steps of:

   - creating a first bitmap (DX) by differentiating along the X-axis the values of pixels of the input bitmap (P);
   - creating a second bitmap (DY) by differentiating along the Y-axis the values of pixels of the input bitmap (P);
   - creating a third bitmap (DXY) by adding bitmaps (DX) and (DY); and
   - creating an output bitmap (M) by subtracting, from the input bitmap (P), the third bitmap (DXY) having values of pixels multiplied by a predetermined positive or negative coefficient (k).

2. The method according to claim 1, wherein the values of pixels of the bitmaps (P, DX, DY, DXY, M) are calculated separately for each color component.

3. The method according to any of previous claims, wherein the output bitmap (M) has pixels represented by the same numbering type as the input bitmap (P).

4. The method according to claim 3, wherein after subtraction of the third bitmap (DXY) from the input bitmap (P), the pixel value exceeds the allowed range of values of the numbering type, the pixel value is changed to the closest allowed value within the range.

5. The method according to any of previous claims, further comprising the step of supplementing the first bitmap (DX) by a column at the end and supplementing the second bitmap (DY) by a row at the end.

6. A computer program comprising program code means for performing all the steps of the computer-implemented method according to any of claims 1-5 when said program is run on a computer.

7. A computer readable medium storing computer-executable instructions performing all the steps of the computer-implemented method according to any of claims 1-5 when executed on a computer.

8. A system for sharpening or blurring an image represented by an input bitmap (P), the system comprising a controller (303) configured to:

   - create a first bitmap (DX) by differentiating along the X-axis the values of pixels of the input bitmap (P);
   - create a second bitmap (DY) by differentiating along the Y-axis the values of pixels of the input bitmap (P);
   - create a third bitmap (DXY) by adding bitmaps (DX) and (DY); and
   - create an output bitmap (M) by subtracting, from the input bitmap (P), the third bitmap (DXY) having values of pixels multiplied by a predetermined positive or negative coefficient (k).

**Amended claims in accordance with Rule 137(2) EPC.**

1. A method for sharpening or blurring an image represented by an input bitmap (P), the method being **characterized in that** it comprises the steps of:

   - creating a first bitmap (DX) by differentiating along the X-axis the values of pixels of the input bitmap (P);

- creating a second bitmap (DY) by differentiating along the Y-axis the values of pixels of the input bitmap (P);
- creating a third bitmap (DXY) by adding bitmaps (DX) and (DY); and
- creating an output bitmap (M) by subtracting, from the input bitmap (P), the third bitmap (DXY) having values of pixels multiplied by a predetermined positive or negative coefficient (k).

2. The method according to claim 1, **characterized in that**

• the values of pixels of the bitmaps (P, DX, DY, DXY, M) are calculated separately for each color component;
• the step of creating a first bitmap (DX) by differentiating along the X-axis the values of pixels of the input bitmap (P) is executed by applying the formula of:

$$DXR_{(x,y)} = \frac{PR_{(x+1,y)} - PR_{(x,y)}}{2}$$

$$DXG_{(x,y)} = \frac{PG_{(x+1,y)} - PG_{(x,y)}}{2}$$

$$DXB_{(x,y)} = \frac{PB_{(x+1,y)} - PB_{(x,y)}}{2}$$

• the step of creating a second bitmap (DY) by differentiating along the Y-axis the values of pixels of the input bitmap (P) is executed by applying the formula of:

$$DYR_{(x,y)} = \frac{PR_{(x,y+1)} - PR_{(x,y)}}{2}$$

$$DYG_{(x,y)} = \frac{PG_{(x,y+1)} - PG_{(x,y)}}{2}$$

$$DYB_{(x,y)} = \frac{PB_{(x,y+1)} - PB_{(x,y)}}{2}.$$

3. The method according to any of previous claims, wherein the output bitmap (M) has pixels represented by the same numbering type as the input bitmap (P).

4. The method according to claim 3, wherein after subtraction of the third bitmap (DXY) from the input bitmap (P), the pixel value exceeds the allowed range of values of the numbering type, the pixel value is changed to the closest allowed value within the range.

5. The method according to any of previous claims, further comprising the step of supplementing the first bitmap (DX) by a column at the end and supplementing the second bitmap (DY) by a row at the end.

6. A computer program comprising program code means for performing all the steps of the computer-implemented method according to any of claims 1-5 when said program is run on a computer.

7. A computer readable medium storing computer-executable instructions performing all the steps of the computer-implemented method according to any of claims 1-5 when executed on a computer.

8. A system for sharpening or blurring an image represented by an input bitmap (P), the system being **characterized in that** is comprises a controller (303) configured to:

   - create a first bitmap (DX) by differentiating along the X-axis the values of pixels of the input bitmap (P);
   - create a second bitmap (DY) by differentiating along the Y-axis the values of pixels of the input bitmap (P);
   - create a third bitmap (DXY) by adding bitmaps (DX) and (DY); and
   - create an output bitmap (M) by subtracting, from the input bitmap (P), the third bitmap (DXY) having values of pixels multiplied by a predetermined positive or negative coefficient (k).

9. The method according to claim 8, **characterized in that**

   • the values of pixels of the bitmaps (P, DX, DY, DXY, M) are calculated separately for each color component;
   • the controller (303) is configured to execute the step of creating a first bitmap (DX) by differentiating along the X-axis the values of pixels of the input bitmap (P) by applying the formula of:

$$DXR_{(x,y)} = \frac{PR_{(x+1,y)} - PR_{(x,y)}}{2}$$

$$DXG_{(x,y)} = \frac{PG_{(x+1,y)} - PG_{(x,y)}}{2}$$

$$DXB_{(x,y)} = \frac{PB_{(x+1,y)} - PB_{(x,y)}}{2}$$

   • the controller (303) is configured to execute the step of creating a second bitmap (DY) by differentiating along the Y-axis the values of pixels of the input bitmap (P) by applying the formula of:

$$DYR_{(x,y)} = \frac{PR_{(x,y+1)} - PR_{(x,y)}}{2}$$

$$DYG_{(x,y)} = \frac{PG_{(x,y+1)} - PG_{(x,y)}}{2}$$

$$DYB_{(x,y)} = \frac{PB_{(x,y+1)} - PB_{(x,y)}}{2}.$$

**101** Create new bitmap DX by differentiating original bitmap P along the X-axis

**102** Add a column of pixels at the end

**103** Create new bitmap DY by Differentiating original bitmap P along the Y-axis

**104** Add a row of pixels at the end

**105** Sum bitmaps DX, DY to obtain bitmap DXY

**106** Multiply values of pixels of DXY by coefficient (k)

**107** Subtract DXY from P

**Fig. 1**

301

302

Memory

303

Controller

304

Input interface

**Fig. 2**

P

DX

DY

DXY

M (k=1.0)

M (k=-1.0)

**Fig. 3**

| | Europäisches Patentamt European Patent Office Office européen des brevets | **EUROPEAN SEARCH REPORT** | Application Number EP 14 46 1519 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | A. POLESEL ET AL: "Image enhancement via adaptive unsharp masking", IEEE TRANSACTIONS ON IMAGE PROCESSING, vol. 9, no. 3, 1 March 2000 (2000-03-01), pages 505-510, XP055104081, ISSN: 1057-7149, DOI: 10.1109/83.826787 * Equation (1); figures 1, 3 * * Section II * | 1-8 | INV. G06T5/00 |
| Y | William K. Pratt: "Chapter 15 Edge Detection" In: "Digital Image Processing", 1 January 2001 (2001-01-01), John Wiley & Sons, Inc., XP055140721, ISBN: 978-0-47-137407-7 pages 443-507, * 15.2.1 Orthogonal Gradient Generation; page 449 - page 461; figures 15.2-1, 15.2-2, * * page 469 - page 482 * | 1-8 | |
| A | RAMPONI G ET AL: "NONLINEAR UNSHARP MASKING METHODS FOR IMAGE CONTRAST ENHANCEMENT", JOURNAL OF ELECTRONIC IMAGING, SPIE / IS & T, 1000 20TH ST. BELLINGHAM WA 98225-6705 USA, vol. 5, no. 3, 1 July 1996 (1996-07-01), pages 353-366, XP000885316, ISSN: 1017-9909, DOI: 10.1117/12.242618 * the whole document * | 1-8 | TECHNICAL FIELDS SEARCHED (IPC) G06T |

-/--

The present search report has been drawn up for all claims

| Place of search | Date of completion of the search | Examiner |
|---|---|---|
| Munich | 22 September 2014 | Blaszczyk, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 14 46 1519

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MITRA S K ET AL: "A new class of nonlinear filters for image enhancement", SPEECH PROCESSING 1. TORONTO, MAY 14 - 17, 1991; [INTERNATIONAL CONFERENCE ON ACOUSTICS, SPEECH & SIGNAL PROCESSING. ICASSP], NEW YORK, IEEE, US, vol. CONF. 16, 14 April 1991 (1991-04-14), pages 2525-2528, XP010043519, DOI: 10.1109/ICASSP.1991.150915 ISBN: 978-0-7803-0003-3 * the whole document * ----- | 1-8 | |

**TECHNICAL FIELDS SEARCHED (IPC)**

The present search report has been drawn up for all claims

| Place of search | Date of completion of the search | Examiner |
|---|---|---|
| Munich | 22 September 2014 | Blaszczyk, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 924 650 A1**

REFERENCES CITED IN THE DESCRIPTION

**Patent documents cited in the description**

- US 5696850 A

- US 20110096366 A